Europäisches Patentamt

(19) European Patent Office

Office européen des brevets

(11) Publication number: **0 113 239**
**B1**

(12) **EUROPEAN PATENT SPECIFICATION**

(45) Date of publication of patent specification: **30.03.88**

(21) Application number: **83307829.8**

(22) Date of filing: **21.12.83**

(51) Int. Cl.⁴: **G 01 M 3/18, F 17 D 5/06**

(54) An insulated pipe system.

<table>
<tr><td>

(30) Priority: **23.12.82 GB 8236681**

(43) Date of publication of application:
**11.07.84 Bulletin 84/28**

(45) Publication of the grant of the patent:
**30.03.88 Bulletin 88/13**

(84) Designated Contracting States:
**AT BE CH DE FR GB IT LI LU NL SE**

(56) References cited:
**DE-A-2 553 789**
**DE-A-2 807 084**
**DE-A-3 140 804**
**DE-C- 579 184**
**GB-A-2 091 880**
**US-A-3 981 181**

**OIL & GAS JOURNAL, vol. 78, no. 6, February 1980, pages 119,120, Tulsa (USA); E. SEATON: "Pipelines laid after 6-year struggle".**

**PATENTS ABSTRACTS OF JAPAN, vol. 5, no. 52(P-56)(724), 11 April 1981, Tokyo (JP);**

**PATENTS ABSTRACTS OF JAPAN, vol. 5, no. 126(P-75)(798), 14 August 1981, Tokyo (JP);**

</td><td>

(73) Proprietor: **BICC Public Limited Company**
**21, Bloomsbury Street**
**London, WC1B 3QN (GB)**

(72) Inventor: **Brinsley, Peter Alfred**
**9 Hill View Avenue**
**Helsby Via Warrington Cheshire (GB)**

(74) Representative: **Denton, Michael John**
**BICC plc Patents and Licensing Department 38**
**Ariel Way Wood Lane**
**London W12 7DX (GB)**

</td></tr>
</table>

Courier Press, Leamington Spa, England.

## Description

This invention relates to an insulated pipe system including means for detecting the presence of fluid in the thermally insulating layer on a pipe (claim 1) and an electric conductor therefor (claim 11).

Known insulated pipes comprise an inner pipe, a surrounding layer of thermally insulating material, and an outer layer of polythene or galvanised steel. Normally these pipes are buried below ground level. If a break occurs in the outer layer fluid can penetrate to the inner pipe causing corrosion and failure. Known arrangements for detecting the presence of fluid are described in UK Patent Specification Nos. 1311472 and 1455415. In these arrangements electric conductors are positioned in the thermally insulating layer during manufacture, the insulating layer being a hygroscopic polyurethane foam, and the resistance across the conductors is monitored. If a fluid penetrates the outer layer and enters the area between the conductors, the resistance across them changes. It has been found however, that in practice the foam material, which is of a closed-cell structure, was electrically insulating the electric conductors from one another, thereby preventing any noticeable change in resistance in the presence of a fluid. This is believed to be caused by the closed-cell structure of the polyurethane foam isolating the conductors during the manufacture of the insulated pipes preventing the fluid reaching the electric conductors.

In GB—A—2091880 this problem has been solved by using a sensor for detecting water penetration into hydrophobic polyurethane thermal insulation disposed around interconnected conduits conprising a pair of spaced electrodes embedded in a body of hydrophilic polyurethane material. But GB—A—2091880 does not disclose conductors provided with both a fluid absorbent layer and a barrier layer between the conductors and the thermally insulating material as given in the characterising portion of claim 1.

In this arrangement the material of the thermally insulating layer does not isolate the conductors during manufacture of the pipe system, and the change in resistance across the conductors due to the presence of fluid has been found to be greatly increased.

Where the pipe is metallic, preferably the pipe constitutes one of the electric conductors and an electrically conductive core constitutes the other conductor, the core comprising a single metal wire or stranded metal wires. Alternatively, or where the pipe is of electrically insulating material, the conductors may comprise two electrically conductive cores, each core comprising a single metal wire or stranded metal wires.

The insulated pipe system preferably comprises a third electric conductor positioned in the thermally insulating layer, the third conductor comprising an electrically conductive core comprising a single metal wire or stranded metal wires, and an outer electrically insulating covering of a non-absorbent material. Preferably the non-absorbent material comprises a thermoplastic, an enamel, lacquered tapes or braid, an elastomer, or a cross-linked thermoplastic.

Preferably the or each core is helically wrapped around the pipe, and preferably positioned adjacent to the outer surface of the pipe.

The absorbent layer on the conductors preferably comprises a cellulose non-woven fibre. Alternatively the absorbent layer may comprise a polyamide tape with a braided outer cover.

The barrier layer is preferably in the form of a tape, preferably of Melinex®. The thermally insulating layer is preferably a polyurethane foam.

Preferably the means for detecting a change in resistance across the conductors due to the presence of fluid includes means for determining the approximate position of the fluid ingress and/or means for locating a break in a conductor (e.g. due to external damage to the pipe). Preferably said break locating means comprises a pulse-echo cable fault finding apparatus. This apparatus transmits pulses down the conductors and determines the time taken for the return of each pulse. From these time measurements the approximate position of the break can be determined. The fluid position detection means preferably comprises a Murray Loop type bridge which, by using the known resistances of the conductors and their lengths, can be used to calculate the position of fluid (that is, the position at which the resistance between the conductors drops). In the case where the insulated pipe system comprises three conductors, one of which is covered with a non-absorbent material, the detection means preferably comprises a monitoring system in which the conductor with the non-absorbent covering is electrically connected to one of the other conductors at one end, and to a monitoring circuit comprising a voltage divider at the other end, the monitoring circuit also being connected to both the other conductors. The monitoring circuit transmits and monitors current flow in the closed loop formed by the conductors with the non-absorbent covering and said one of the other conductors; any fall to zero of the monitored current indicates a break in one of the conductors of the loop. The monitoring circuit also monitors the flow of current across the conductors with the absorbent covering; in the presence of fluid the resistance across the these conductors falls, and the current flow increase. Preferably the monitoring system is operated continuously.

This arrangement has been found to work for various types of fluid including water and petrochemical liquids.

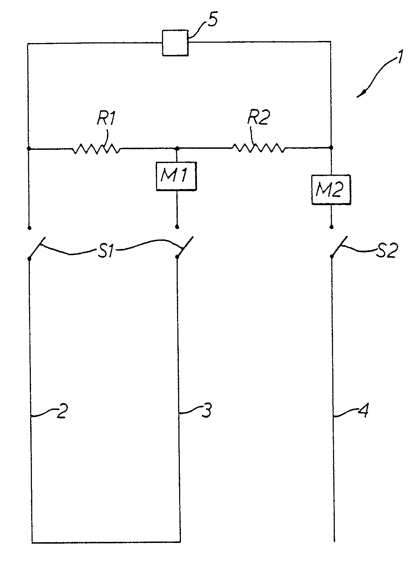

Referring to the drawing, the detecting means 1 of the insulated pipe system is connected to three electrical conductors 2, 3, 4. Conductor 2 is covered with a non-absorbent material. Conductors 3, 4 are covered with a fluid absorbent layer and an outer barrier layer. Conductor 4 is defined by the metal pipe of the pipe system. Conductors 2, 3 are electrically connected at one end. the detecting means 1 comprises a monitoring system comprising a monitoring circuit including a power supply 5, a voltage divider defined by two resistances R1 and R2, two current monitors M1 and M2, and switches S1 and S2. With the switches S1 and S2 in the closed position, current monitor M1 monitors any fall to zero of the current in the closed loop defined by conductors 2, 3 due to a break in one or both conductors, and current monitor M2 monitors any rise in current flow between conductors 3 and 4 due to the presence of fluid around one or both conductors which lowers the resistance across them. After monitoring of a break, and/or the presence of fluid, switches S1 and S2 are opened and conductors 2, 3 are connected to pulse-echo apparatus to locate the position of the break, and/or conductors 2, 3, 4 are connected to a Murray Loop bridge to locate the position of the fluid.

## Claims

1. An insulated pipe system including means for detecting the presence of fluid in a thermally insulating layer on a pipe comprising at least two electric conductors positioned in the thermally insulating layer, and means for detecting a change in resistance across the conductors due to the presence of fluid, characterised in that said at least two conductors have an electrically insulating covering comprising a fluid absorbent layer and an outer barrier layer, the barrier layer preventing the thermally insulating layer reaching the absorbent layer.

2. A pipe system as claimed in Claim 1, characterised in that the pipe is metallic, and the pipe constitutes one of the electric conductors and an electrically conductive core constitutes the other conductor, the core comprising a single metal wire or stranded metal wires.

3. A pipe system as claimed in Claim 1, characterised in that each conductor comprises an electrically conductive core, each core comprising a single metal wire or stranded metal wires.

4. A pipe system as claimed in any one of the preceding Claims characterised in that the system comprises a third electric conductor, wherein the third conductor comprises an electrically conductive core comprising a single metal wire or stranded metal wires, and an outer electrically insulating cover of a non-absorbent material.

5. A pipe system as claimed in any one of claims 2 to 4, characterised in that the or each core is helically wrapped around the pipe.

6. A pipe system as claimed in Claim 5, characterised in that the or each core is positioned adjacent the outer surface of the pipe.

7. A pipe system as claimed in any one of the preceding Claims, characterised in that the means for detecting a change in resistance across the conductor due to the presence of fluid includes means for determining the approximate position of the fluid ingress and/or means for locating a break in a conductor.

8. A pipe system as claimed in Claim 7, characterised in that said break detecting means comprises a pulse-echo cable fault finding apparatus.

9. A pipe system as claimed in Claim 7, characterised in that the fluid position detection means comprises a Murray Loop type bridge.

10. A pipe system as claimed in any one of the preceding Claims characterised in that the pipe system comprises three conductors one of which is covered with a non-absorbent material, wherein the detecting means comprises a monitoring system in which the conductor with the non-absorbent covering is electrically connected to one of the other conductors at one end, and to a monitoring circuit comprising a voltage divider at the other, the monitoring circuit also being connected to both the other conductors; the monitoring circuit monitoring current flow in the closed loop formed by the conductor with the non-absorbent covering and the said one of the other conductors, and across the conductors with absorbent covering.

11. An electric conductor for use in an insulated pipe system as claimed in any of Claims 1 to 10 wherein the conductor has an electrically insulating covering in the form of a fluid absorbent layer characterised in that the fluid absorbent layer is surrounded by an outer barrier layer.

12. An electric conductor as claimed in Claim 11 characterised in that the barrier layer comprises a layer of tape.

13. An electric conductor as claimed in Claim 11 or Claim 12 characterised in that the fluid absorbent layer comprises a cellulose non-woven fibre.

14. An electric conductor as claimed in Claim 11 or Claim 12 characterised in that the fluid absorbent layer comprises a polyamide tape with a braided outer cover.

## Patentansprüche

1. Isoliertes Rohrleitungssystem mit einem Detektor zum Feststellen eines Fluids in einer thermisch isolierenden Schicht auf einer Rohrleitung mit mindestens zwei in der thermisch isolierenden Schicht angeordneten elektrischen Leitern und mit einer Einrichtung zum Feststellen einer Widerstandsänderung in den Leitern aufgrund des Vorhandenseins des Fluids, dadurch gekennzeichnet, daß mindestens zwei Leiter einen elektrisch isolierenden Überzug mit einer das Fluid absorbierenden Schicht und einer äußeren Grenzschicht aufweisen, die die thermisch isolierende Schicht von der absorbierenden Schicht trennt.

2. Rohrleitungssystem nach Anspruch 1, dadurch gekennzeichnet, daß die Rohrleitung aus Metall besteht und daß der eine elektrische Leiter durch die Rohrleitung und der andere Leiter durch einen elektrisch leitfähigen Kern gebildet werden, der einen einzelnen Metalldraht oder verseilte Metalldrähte aufweist.

3. Rohrleitungssystem nach Anspruch 1, dadurch gekennzeichnet, daß jeder Leiter einen elektrisch leitfähigen Kern aufweist, der jeweils einen einzelnen Metalldraht oder verseilte Metalldrähte aufweist.

4. Rohrleitungssystem nach einem der vorangehenden Ansprüche, gekennzeichnet durch einen dritten elektrischen Leiter mit einem elektrisch leitfähigen Kern, der einen einzelnen Metalldraht oder verseilte Metalldrähte aufweist, und durch einen äußeren elektrisch isolierenden Überzug aus einem nicht-absorbierenden Material.

5. Rohrleitungssystem nach einem der Ansprüche 2 bis 4, dadurch gekennzeichnet, daß der oder jeder Kern schraubenförmig um die Rohrleitung gewickelt ist.

6. Rohrleitungssystem nach Anspruch 5, dadurch gekennzeichnet, daß der oder jeder Kern in der Nähe der Außenfläche der Rohrleitung angeordnet ist.

7. Rohrleitungssystem nach einem der vorstehenden Ansprüche, dadurch gekennzeichnet, daß die Einrichtung zum Feststellen einer Widerstandsänderung im Leiter aufgrund des Vorhandenseins eines Fluids eine Einrichtung zum Ermitteln der ungefähren Position des Fluideinlaufs und/oder eine Einrichtung zum Lokalisieren eines Bruchs eines Leiters aufweist.

8. Rohrleitungssystem nach Anspruch 7, dadurch gekennzeichnet, daß der Bruchdetektor einen Impulsecho-Kabelfehlerdetektor aufweist.

9. Rohrleitungssystem nach Anspruch 7, dadurch gekennzeichnet, daß der Detektor zum Feststellen der Position des Fluideinlaufs eine Murray-Schleifenbrücke aufweist.

10. Rohrleitungssystem nach einem der vorstehenden Ansprüche, dadurch gekennzeichnet, daß es drei Leiter aufweist, von denen einer mit einem nicht-absorbierenden Material beschichtet ist, wobei der Detektor eine Überwachungseinrichtung aufweist, in der der Leiter mit der nicht-absorbierenden Beschichtung am einen Ende mit einem der anderen Leiter und am anderen Ende mit einem Überwachungsschaltkreis mit einem Spannungsteiler elektrisch verbunden ist, wobei der Überwachungsschaltkreis ferner mit den beiden anderen Leitern verbunden ist, wobei der Überwachungsstrom des Überwachungsschaltkreises in der geschlossenen Schleife, die durch den Leiter mit der nicht-absorbierenden Beschichtung und dem einen der anderen Leiter gebildet wird, und über die Leiter mit der absorbierenden Beschichtung fließt.

11. Elektrischer Leiter für ein isoliertes Rohrleitungssystem nach einem der Ansprüche 1 bis 10, dadurch gekennzeichnet, daß der Leiter einen elektrisch isolierenden Überzug in Form einer ein Fluid absorbierenden Schicht aufweist, dadurch gekennzeichnet, daß die das Fluid absorbierende Schicht von einer äußeren Grenzschicht umgeben ist.

12. Elektrischer Leiter nach Anspruch 11, dadurch gekennzeichnet, daß die Grenzschicht eine Schicht aus Bandmaterial aufweist.

13. Elektrischer Leiter nach Anspruch 11 oder 12, dadurch gekennzeichnet, daß die das Fluid absorbierende Schicht ein vliesartiges Cellulosefasermaterial aufweist.

14. Elektrischer Leiter nach Anspruch 11 oder 12, dadurch gekennzeichnet, daß die das Fluid absorbierende Schicht ein Polyamid-Bandmaterial mit einem geflochtenen, äußeren Überzug aufweist.

**Revendications**

1. Système de canalisation isolée comportant un moyen pour déceler la présence de fluide dans une couche thermiquement isolante sur une canalisation comprenant au moins deux conducteurs électriques disposés dans la couche thermiquement isolante, et un moyen pour détecter un changement dans la résistance entre les conducteurs à cause de la présence de fluide, caractérisé en ce que lesdits deux conducteurs au moins ont une enveloppe électriquement isolante comprenant une couche d'absorption de fluides et une couche extérieure d'arrêt, la couche d'arrêt empêchant la couche thermiquement isolante d'atteindre la couche d'absorption.

2. Système de canalisation selon la revendication 1, caractérisé en ce que la canalisation est métallique, et la canalisation constitue un des conducteurs électriques et un élément central conducteur de l'électricité constitue l'autre conducteur, l'élément central comprenant un fil métallique unique ou un toron de fils métalliques.

3. Système de canalisation selon la revendication 1, caractérisé en ce que chaque conducteur comporte une élément central conducteur de l'électricité, chaque élément central comprenant un fil métallique unique ou un toron de fils métalliques.

4. Système de canalisation selon l'une quelconque des revendications précédentes, caractérisé en ce que le système comprend un troisième conducteur électrique, dans lequel le troisième conducteur comporte un élément central conducteur de l'électricité comportant un fil métallique unique ou un toron de fils métalliques, et une enveloppe extérieure électriquement isolante en matière non-absorbante.

5. Système de canalisation selon l'une quelconque des revendications 2 à 4, caractérisé en ce que l'élément central ou chaque élément central est enroulé hélicoïdalement autour de la canalisation.

6. Système de canalisation selon la revendication 5, caractérisé en ce que l'élément central ou chaque élément central est disposé de manière contiguë à la surface extérieure de la canalisation.

7. Système de canalisation selon l'une quelconque des revendications précédentes, caractérisé en ce que le moyen pour détecter un changement dans la résistance entre les conducteurs à cause de la présence de fluide comporte un moyen pour déterminer la position approximative de l'entrée de fluide et/ou un moyen pour localiser une rupture dans un conducteur.

8. Système de canalisation selon la revendication 7, caractérisé en ce que ledit moyen de détection de ruptures comporte un appareil de détection de ruptures de câbles par échos d'impulsions.

9. Système de canalisation selon la revendication 7, caractérisé en ce que le moyen de détection d'emplacement de fluide comporte un pont à boucle de Murray.

10. Système de canalisation selon l'une quelconque des revendications précédentes, caractérisé en ce que le système de canalisation comporte trois conducteurs dont l'un est enveloppé de matière non-absorbante, dans lequel le moyen de détection comprend un système de contrôle dans lequel le conducteur à enveloppe non-absorbante est relié électriquement à un premier des autres conducteurs à une extrémité, et à un circuit de contrôle comportant un diviseur de tension à l'autre extrémité, le circuit de contrôle étant également relié aux deux autres conducteurs; le circuit de contrôle contrôlant le passage de courant dans la boucle fermée créée par le conducteur à enveloppe non-absorbante et audit premier des autres conducteurs, et entre les conducteurs à enveloppe absorbante.

11. Conducteur électrique destiné à un système de canalisation isolée selon l'une quelconque des revendications 1 à 10, dans lequel le conducteur a une enveloppe électriquement isolante sous la forme d'une couche d'absorption de fluides, caractérisé en ce que la couche d'absorption de fluides est entourée par une couche extérieure d'arrêt.

12. Conducteur électrique selon la revendication 11, caractérisé en ce que la couche d'arrêt comporte une couche de ruban.

13. Conducteur électrique selon la revendication 11 ou la revendication 12, caractérisé en ce que la couche d'absorption de fluides comporte des fibres cellulosiques non-tissées.

14. Conducteur électrique selon la revendication 11 ou la revendication 12, caractérisé en ce que la couche d'absorption de fluides comprend un ruban en polyamide sous tresse extérieure.